(19) Europäisches Patentamt
European Patent Office
Office européen des brevets

(11) EP 2 334 615 B1

(12) **FASCICULE DE BREVET EUROPEEN**

(45) Date de publication et mention de la délivrance du brevet:
**19.04.2017 Bulletin 2017/16**

(21) Numéro de dépôt: **09752200.7**

(22) Date de dépôt: **08.10.2009**

(51) Int Cl.:
***C04B 24/26*** (2006.01) ***C04B 24/28*** (2006.01)
***C04B 28/04*** (2006.01) ***C04B 40/00*** (2006.01)
***C04B 24/24*** (2006.01) ***C04B 7/12*** (2006.01)
***C04B 7/14*** (2006.01) ***C04B 7/24*** (2006.01)
***C04B 7/345*** (2006.01)

(86) Numéro de dépôt international:
**PCT/FR2009/001191**

(87) Numéro de publication internationale:
**WO 2010/040915 (15.04.2010 Gazette 2010/15)**

(54) **COMPOSITION À BASE DE MATÉRIAU HYDRAULIQUE ET/OU POUZZOLANIQUE**

ZUSAMMENSETZUNG, DIE EIN HYDRAULISCHES UND/ODER PUZZOLANISCHES MATERIAL ENTHÄLT

COMPOSITION CONTAINING A HYDRAULIC AND/OR POZZOLAN MATERIAL

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **10.10.2008 FR 0805597**

(43) Date de publication de la demande:
**22.06.2011 Bulletin 2011/25**

(73) Titulaire: **Lafarge**
**75116 Paris (FR)**

(72) Inventeurs:
- **GEORGES, Sébastien**
**F-69780 Mions (FR)**
- **COMPARET, Cédric**
**F-38460 Optevoz (FR)**
- **THIBAUT, Bruno**
**38510 Sermerieu (FR)**
- **VILLARD, Emmanuel**
**F-42320 Saint Christo en Jarez (FR)**

(74) Mandataire: **Regimbeau**
**20, rue de Chazelles**
**75847 Paris Cedex 17 (FR)**

(56) Documents cités:
**WO-A-98/51640**
**WO-A-2006/032786**
**DE-A1-102005 005 691**
**FR-A- 2 897 057**
**JP-A- 3 100 295**
**JP-A- 9 020 536**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 334 615 B1

## Description

La présente invention a pour objet une composition à base de matériau hydraulique et/ou pouzzolanique permettant de valoriser des matières premières pas ou peu utilisables jusqu'à présent pour la fabrication d'une composition hydraulique, lesdits matériaux n'étant pas un clinker, ni du calcaire, ni du gypse, ni du sulfate de calcium, ni du sulfate de calcium anhydre, ni du sulfate de calcium semihydraté, ni du plâtre, ni de la chaux.

L'utilisation de matériaux hydrauliques et/ou pouzzolaniques, qui ne sont pas un clinker, ni du calcaire, ni du gypse, ni du sulfate de calcium, ni du sulfate de calcium anhydre, ni du sulfate de calcium semihydraté, ni du plâtre, ni de la chaux, dans la formulation des ciments pour former des compositions hydrauliques est bien connue de l'homme du métier (voir notamment les ciments aux ajouts de types CEM II à CEM V selon la norme EN 197-1, qui précise la nature et la quantité desdits matériaux hydrauliques et/ou pouzzolaniques).

On connaît par exemple la demande de brevet FR 2 897 057, qui divulgue une composition comprenant un liant hydraulique et un polymère cationique ayant une densité de charge cationique supérieure à 0,5 meq/g et une viscosité intrinsèque inférieure à 1 dl/g. Cette demande de brevet précise que le liant hydraulique peut être tout matériau à prise hydraulique, mais les matériaux pouzzolaniques ne sont pas cités.

On connaît également par exemple la demande de brevet WO 2006/032786, qui divulgue une composition comprenant une composition hydraulique et un polymère cationique ayant une densité de charge cationique supérieure à 0,5 meq/g et une viscosité intrinsèque inférieure à 1 dl/. Cette demande de brevet précise que la composition hydraulique peut être toute composition présentant une prise hydraulique, mais les matériaux pouzzolaniques ne sont pas cités.

On connaît aussi par exemple la demande de brevet WO 98/51640, qui divulgue un mélange cimentaire comprenant un ciment hydraulique, plus de 10 % en masse d'une pouzzolane en remplacement du ciment et un adjuvant de compatibilisation. La pouzzolane est choisie parmi les cendres volantes, les laitiers, les pouzzolanes naturelles et leurs mélanges. L'adjuvant de compatibilisation comprend un dispersant polymère carboxylate capable d'agir comme un réducteur d'eau en combinaison avec un accélérateur. Aucun polymère cationique n'est cité dans ce document.

Or, les matériaux hydrauliques et/ou pouzzolaniques, qui ne sont pas un clinker, ni du calcaire, ni du gypse, ni du sulfate de calcium, ni du sulfate de calcium anhydre, ni du sulfate de calcium semihydraté, ni du plâtre, ni de la chaux, ont des caractéristiques qui rendent leur utilisation parfois difficile car ils ne correspondent pas intrinsèquement aux exigences des formulateurs. Une partie plus ou moins importante desdits matériaux hydrauliques et/ou pouzzolaniques ne peut donc pas être utilisée pour la fabrication de compositions hydrauliques. L'utilisation de tels matériaux hydrauliques et/ou pouzzolaniques peut par exemple entraîner des problèmes en termes de demande en eau ou de surdosage en adjuvants.

Afin de répondre aux exigences et aux besoins des formulateurs, il est devenu nécessaire de trouver un moyen pour valoriser des matériaux hydrauliques et/ou pouzzolaniques, qui ne sont pas un clinker, ni du calcaire, ni du gypse, ni du sulfate de calcium, ni du sulfate de calcium anhydre, ni du sulfate de calcium semihydraté, ni du plâtre, ni de la chaux, et qui ne conviennent pas ou peu pour la fabrication de compositions hydrauliques.

Aussi le problème que se propose de résoudre l'invention est de fournir un nouveau moyen adapté pour valoriser des matériaux hydrauliques et/ou pouzzolaniques, qui ne sont pas un clinker, ni du calcaire, ni du gypse, ni du sulfate de calcium, ni du sulfate de calcium anhydre, ni du sulfate de calcium semihydraté, ni du plâtre, ni de la chaux, et qui peuvent être pas ou peu utilisables jusqu'à présent pour la fabrication de compositions hydrauliques, tout en obtenant les performances des compositions hydrauliques standards.

De manière inattendue, les inventeurs ont mis en évidence qu'il est possible d'utiliser des polymères cationiques particuliers pour valoriser les matériaux hydrauliques et/ou pouzzolaniques, lesdits matériaux n'étant pas un clinker, ni du calcaire, ni du gypse, ni du sulfate de calcium, ni du sulfate de calcium anhydre, ni du sulfate de calcium semihydraté, ni du plâtre, ni de la chaux.

Dans ce but la présente invention propose un mélange comprenant au moins un matériau hydraulique et/ou pouzzolanique et au moins un polymère cationique hydrosoluble, ledit polymère cationique présentant une densité de charges cationiques supérieure à 0,5 meq/g et une viscosité intrinsèque inférieure à 1 dl/g, et ledit matériau hydraulique et/ou pouzzolanique n'étant pas un clinker, ni du calcaire, ni du gypse, ni du sulfate de calcium, ni du sulfate de calcium anhydre, ni du sulfate de calcium semihydraté, ni du plâtre, ni de la chaux.

L'invention offre des avantages déterminants, en particulier les compositions hydrauliques obtenues à partir du mélange selon l'invention nécessitent un dosage en superplastifiant bien inférieur à celui qui serait nécessaire pour une composition hydraulique obtenue à partir des mêmes matériaux hydrauliques et/ou pouzzolaniques dans les mêmes proportions mais sans polymère cationique, pour une consistance ou fluidité identique.

Selon un autre avantage de l'invention, les compositions hydrauliques obtenues à partir du mélange selon l'invention nécessitent une quantité d'eau totale bien inférieure à celle qui serait nécessaire pour une composition hydraulique obtenue à partir des mêmes matériaux hydrauliques et/ou pouzzolaniques dans les mêmes proportions mais sans polymère cationique, pour une consistance ou fluidité identique.

L'invention offre comme autre avantage que les compositions hydrauliques comprenant le mélange selon

l'invention ont une demande en eau inférieure à celle des mêmes matériaux hydrauliques et/ou pouzzolaniques mais sans polymère cationique.

Selon un autre avantage de l'invention, les compositions hydrauliques comprenant le mélange selon l'invention présentent un meilleur maintien d'ouvrabilité.

Un autre avantage de l'invention est la réduction des émissions de $CO_2$. En effet, le mélange selon l'invention permet d'utiliser en substitution du clinker une plus grande quantité de matériaux hydrauliques et/ou pouzzolaniques, lesdits matériaux n'étant pas un clinker, ni du calcaire, ni du gypse, ni du sulfate de calcium, ni du sulfate de calcium anhydre, ni du sulfate de calcium semihydraté, ni du plâtre, ni de la chaux, et ce, sans dégrader les performances des compositions hydrauliques obtenues, notamment en termes de rhéologie et de résistances mécaniques.

En outre, l'invention présente l'avantage d'être facile à mettre en oeuvre, car la détermination de la quantité de polymère cationique selon l'invention peut être facilement déterminée par simple mesure de la valeur de bleu (voir les normes NF EN 933-9 annexe A et NF 18-595). En effet, la valeur de bleu permet de déterminer la propreté des matériaux granulaires, comme par exemple les matériaux hydrauliques et/ou pouzzolaniques tels que définis selon l'invention, c'est-à-dire la quantité d'impuretés (comme par exemples des argiles) contenues dans ces matériaux. Or, des tests de routine permettent de tracer la courbe (dosage en polymère cationique selon l'invention en fonction de la valeur de bleu mesurée) et ainsi de déterminer, pour un matériau granulaire donné, la relation existant entre la valeur de bleu et la quantité de polymère cationique selon l'invention nécessaire pour obtenir le résultat souhaité.

Enfin l'invention a pour avantage de pouvoir être mise en oeuvre dans toutes industries, notamment l'industrie du bâtiment, l'industrie chimique (adjuvantiers) et dans l'ensemble des marchés de la construction (bâtiment, génie civil ou usine de préfabrication), de l'industrie de la construction ou de l'industrie cimentière.

D'autres avantages et caractéristiques de l'invention apparaîtront clairement à la lecture de la description et des exemples donnés à titre purement illustratifs et non limitatifs qui vont suivre.

L'invention concerne un mélange comprenant au moins un matériau hydraulique et/ou pouzzolanique et au moins un polymère cationique hydrosoluble, ledit polymère cationique présentant une densité de charges cationiques supérieure à 0,5 meq/g et une viscosité intrinsèque inférieure à 1 dl/g, et ledit matériau n'étant pas un clinker, ni du calcaire, ni du gypse, ni du sulfate de calcium, ni du sulfate de calcium anhydre, ni du sulfate de calcium semihydraté, ni du plâtre, ni de la chaux.

On entend par l'expression « liant hydraulique » selon la présente invention un matériau qui, gâché avec de l'eau, forme une pâte qui fait prise et durcit par suite de réactions d'hydratation et qui, après durcissement, conserve sa résistance et sa stabilité même sous l'eau. De préférence, un liant hydraulique selon l'invention est un clinker ou un ciment, avantageusement un ciment Portland.

On entend par l'expression « matériau hydraulique » selon la présente invention un liant hydraulique qui n'est pas un clinker, ni du calcaire, ni du gypse, ni du sulfate de calcium, ni du sulfate de calcium anhydre, ni du sulfate de calcium semihydraté, ni du plâtre.

On entend par l'expression « matériau pouzzolanique » selon la présente invention un matériau qui durcit au contact de la chaux en milieu aqueux (voir EN 197.1 paragraphe 5.2.3.1). Même si un matériau pouzzolanique a besoin de chaux pour durcir, la chaux en tant que telle ne fait pas partie des matériaux pouzzolaniques.

Les matériaux hydrauliques et/ou pouzzolaniques selon la présente invention ne peuvent pas être un clinker, quel qu'il soit.

Les matériaux hydrauliques et/ou pouzzolaniques selon la présente invention ne peuvent pas être du calcaire, ni du gypse, ni du sulfate de calcium, ni du sulfate de calcium anhydre, ni du sulfate de calcium semihydraté, ni du plâtre, ni de la chaux. Les matériaux hydrauliques et/ou pouzzolaniques selon l'invention peuvent notamment être des pouzzolanes naturelles, des pouzzolanes calcinées, des argiles calcinées, des schistes calcinés, des cendres volantes, des laitiers, des fumées de silice ou leurs mélanges. De préférence, les matériaux hydrauliques et/ou pouzzolaniques selon la présente invention sont des pouzzolanes, des argiles calcinées, des cendres volantes, des fumées de silice ou leurs mélanges.

On entend par le terme « pouzzolanes » selon la présente invention des matériaux siliceux et/ou silico-alumineux comprenant essentiellement du $SiO_2$ réactif et du $Al_2O_3$. Parmi les pouzzolanes, on peut citer les pouzzolanes naturelles, qui sont en général des matériaux d'origine volcanique ou des roches sédimentaires, et les pouzzolanes calcinées, qui sont des matériaux d'origine volcanique, des argiles, des schistes ou des roches sédimentaires activés thermiquement. (voir norme EN 197-1 paragraphe 5.2.3) Les pouzzolanes selon l'invention peuvent être choisies parmi les ponces, les tuff, les scories ou leurs mélanges.

On entend par le terme « argiles calcinées » selon la présente invention des argiles qui ont subi un traitement thermique.

On entend par le terme « argiles » selon la présente invention des phyllosilicates, principalement à structure en feuillets, voire fibreux (par exemple des silicates d'aluminium et/ou de magnésium), qui, caractérisés par diffraction par rayons X par exemple, possèdent un paramètre de maille atomique des plans cristallographiques [001] ($d_{(001)}$) variant de 7 à 15 Angströms. Les argiles selon l'invention peuvent être choisies parmi la kaolinite ($d_{(001)}$ = 7 Angströms),

les smectites (terme générique utilisé pour désigner les argiles gonflantes, dont la montmorillonite), l'illite, la muscovite ($d_{(001)}$ = 10 Angströms), les chlorites ($d_{(001)}$ = 14 Angströms), ou leurs mélanges.

On entend par le terme « schiste calciné » selon la présente invention un matériau produit dans un four spécial à une température d'environ 800°C comprenant principalement du silicate bicalcique et de l'aluminate monocalcique. (voir norme EN 197-1 paragraphe 5.2.5)

On entend par le terme « laitier » selon la présente invention un laitier choisi parmi les laitiers granulés de haut fourneau selon la norme EN 197-1 paragraphe 5.2.2, les laitiers d'aciérie ou leurs mélanges.

On entend par le terme « cendre volante » selon la présente invention un matériau obtenu par précipitation électrostatique ou mécanique de particules pulvérulentes contenues dans les fumées des chaudières alimentées au charbon pulvérisé (voir norme EN 197-1 paragraphe 5.2.4). Les cendres volantes selon l'invention peuvent être de nature siliceuse ou calcique.

On entend par le terme « fumée de silice » selon la présente invention un matériau obtenu par réduction de quartz de grande pureté par du charbon dans des fours à arcs électriques utilisés pour la production de silicium et d'alliages de ferrosilicium (voir norme EN 197-1 paragraphe 5.2.7). Les fumées de silice sont formées de particules sphériques comprenant au moins 85% en masse de silice amorphe.

On entend par le terme « polymère » selon la présente invention un composé comportant plus de deux monomères, identiques ou différents, présentant un ordre particulier ou non.

Par le terme « clinker », on entend selon la présente l'invention le produit obtenu après cuisson (la clinkérisation) d'un mélange (le cru), composé entre autres de calcaire et par exemple d'argile.

On entend par le terme « clinker Portland » selon la présente invention un matériau hydraulique constitué d'au moins deux tiers en masse de silicates de calcium ($3CaO.SiO_2$ et $2CaO.SiO_2$), la partie restante étant constituée de phases contenant de l'aluminium et du fer, ainsi que d'autres composants. Le rapport massique $(CaO)/(SiO_2)$ ne doit pas être inférieur à 2,0. La teneur en oxyde de magnésium (MgO) ne doit pas dépasser 5,0 % en masse.

On entend par le terme « composition hydraulique » selon la présente invention une composition présentant une prise hydraulique, et tout particulièrement les coulis, mortiers et bétons destinés à l'ensemble des marchés de la construction (bâtiment, génie civil, puits de forage ou usine de préfabrication).

On entend par le terme « objet durci » selon la présente invention un objet obtenu après prise et durcissement d'une composition hydraulique. L'objet peut être par exemple un mur, un sol, une fondation, un pilier de pont, un produit issu d'une usine de préfabrication, un enduit de surface, un revêtement, un liant à maçonner, un produit de jointoiement ou une colle.

On entend par le terme « demande en eau » selon la présente invention la quantité d'eau nécessaire pour obtenir une fluidité cible dans une composition hydraulique.

On entend par le terme « matière active » selon la présente invention un composé qui a un effet sur les matériaux hydrauliques et/ou pouzzolaniques tels que définis selon la présente invention dans le cadre de leur utilisation pour la fabrication d'une composition hydraulique. En particulier, la matière active n'est pas un solvant.

## Mélange

De préférence, le mélange selon l'invention comprend ledit au moins un matériau hydraulique et/ou pouzzolanique choisi parmi les pouzzolanes naturelles, les pouzzolanes calcinées, les argiles calcinées, les cendres volantes, les schistes calcinés, les laitiers, les fumées de silice ou leurs mélanges. Avantageusement, le mélange selon l'invention comprend ledit au moins un matériau hydraulique et/ou pouzzolanique choisi parmi les pouzzolanes, les argiles calcinées, les cendres volantes, les fumées de silice ou leurs mélanges.

De préférence, le mélange selon l'invention comprend ledit au moins un matériau hydraulique et/ou pouzzolanique qui est une pouzzolane. Avantageusement, les pouzzolanes selon l'invention sont choisies parmi les ponces, les tuff, les scories ou leurs mélanges.

De préférence, le mélange selon l'invention comprend ledit au moins un matériau hydraulique et/ou pouzzolanique qui est une argile calcinée. Avantageusement, les argiles calcinées selon l'invention sont choisies parmi la kaolinite, les smectites, l'illite, la muscovite, les chlorites, activées thermiquement, ou leurs mélanges.

De préférence, le mélange selon l'invention comprend ledit au moins un matériau hydraulique et/ou pouzzolanique qui est une cendre volante.

De préférence, le mélange selon l'invention comprend ledit au moins un matériau hydraulique et/ou pouzzolanique qui est de la fumée de silice.

De préférence, le matériau hydraulique et/ou pouzzolanique selon l'invention peut être une kaolinite calcinée, également appelée un métakaolin.

De préférence, le mélange selon l'invention comprend en outre au moins un adjuvant habituel, comme par exemple un agent de mouture, un accélérateur, un agent entraîneur d'air, un agent viscosant, un retardateur, un fluidifiant, un agent anti-retrait ou leurs mélanges.

De préférence, le mélange selon l'invention comprend une quantité de polymère cationique inférieure ou égale à 2 %, de préférence inférieure ou égale à 1 % par rapport au matériau hydraulique et/ou pouzzolanique selon l'invention.

De préférence, le mélange selon l'invention comprend en outre un accélérateur. Ledit accélérateur peut être n'importe quel accélérateur connu, avantageusement un sel de calcium.

Polymère cationique

Selon l'invention, le polymère cationique est hydrosoluble et présente une cationicité supérieure à 0,5 meq/g, de préférence supérieure à 1 meq/g, et en particulier supérieure à 2 meq/g.

Selon l'invention, le polymère cationique présente en outre un poids moléculaire exprimé par une viscosité intrinsèque inférieure à 1 dl/g, de préférence inférieure à 0,8 dl/g, et en particulier inférieure à 0,6 dl/g.

Le polymère cationique selon l'invention peut présenter une structure linéaire, peigne ou ramifiée. De préférence, le polymère cationique selon l'invention est linéaire. Sont exclus des polymères cationiques selon l'invention les polymères cationiques insolubles en milieu aqueux, comme par exemple les latex cationiques SBR tels que décrits dans la demande de brevet JP H09-020536.

Les groupes cationiques peuvent être notamment des groupes phosphonium, pyridinium, sulfonium et amine quaternaire, ces derniers étant préférés. Ces groupes cationiques peuvent être situés dans la chaîne du polymère ou comme groupe pendant.

Un grand nombre de polymères cationiques sont connus en tant que tels. De tels polymères peuvent être obtenus directement par un des procédés de polymérisation connus, tels que la polymérisation radicalaire, la polycondensation ou la polyaddition.

Ils peuvent également être préparés par modification post-synthétique d'un polymère, par exemple par greffage de groupements portant une ou plusieurs fonctions cationiques sur une chaîne polymérique portant des groupes réactifs appropriés.

La polymérisation est réalisée à partir d'au moins un monomère portant un groupe cationique ou un précurseur adapté.

Les polymères obtenus à partir de monomères portant des groupes amine et imine sont particulièrement utiles. L'azote peut être quaternisé après polymérisation de manière connue, par exemple par alkylation à l'aide d'un composé alkylant, par exemple par du chlorure de méthyle, ou en milieu acide, par protonation.

Les polymères cationiques contenant des groupes cationiques d'amine quaternaire sont particulièrement appropriés.

Parmi les monomères portant déjà une fonction amine quaternaire cationique, on peut citer notamment les sels de diallyldialkyl ammonium, les (meth)acrylates de dialkylaminoalkyl quaternisés, et les (meth)acrylamides N-substitués par un dialkylaminoalkyl quaternisé.

La polymérisation peut être réalisée avec des monomères non ioniques, de préférence à chaîne courte, comportant 2 à 6 atomes de carbone. Des monomères anioniques peuvent également être présents dans la mesure où ils n'affectent pas les groupements cationiques.

Dans le cadre de la modification de polymères par greffage, on peut citer les polymères naturels greffés, tels que les amidons cationiques.

Avantageusement, le polymère cationique selon l'invention contient des groupes dont le caractère cationique ne se manifeste qu'en milieu acide. Les groupes amines tertiaires, cationiques par protonation en milieu acide, sont particulièrement préférés. L'absence de caractère ionique dans les compositions hydrauliques de type béton ou mortier présentant un pH alcalin permet d'améliorer encore leur robustesse vis-à-vis d'autres composés ioniques, notamment anioniques.

A titre d'exemple, on peut citer des polymères cationiques de la famille des polyvinylamines, lesquels peuvent être obtenus par polymérisation de N-vinylformamide, suivie d'une hydrolyse. Les polyvinylamines quaternisés peuvent être préparés comme décrit dans le brevet US 5,292,441. Sont également appropriés les polymères de type polyéthylèneimine. Ces derniers sont quaternisés par protonation.

Particulièrement préférés sont les polymères cationiques obtenus par polycondensation d'épichlorhydrine avec une mono- ou dialkylamine, notamment la méthylamine ou la diméthylamine. Leur préparation a été décrite par exemple dans les brevets US 3,738,945 et US 3,725,312.

De préférence, les polymères cationiques peuvent être des polymères d'origine naturelle. On peut citer notamment le chitosan protoné ou quaternisé.

Le motif du polymère cationique obtenu par polycondensation de diméthylamine et d'épichlorhydrine peut être représenté comme suit :

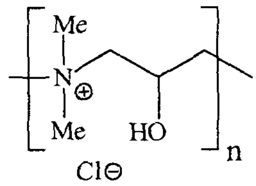

Egalement appropriés sont les polymères de type polyacrylamide modifiés par réaction de Mannich tel que le polyacrylamide N-substitué par un groupe diméthylaminométhyle.
Egalement appropriés sont les polymères cationiques obtenus par polycondensation de dicyandiamide et de formaldéhyde. Ces polymères et leur procédé d'obtention sont décrits dans le brevet FR 1 042 084.
De préférence, les polymères cationiques selon l'invention peuvent être quaternisés par un sel d'ammonium autre que le chlorure d'ammonium.
Avantageusement, le polymère cationique selon l'invention peut posséder d'autres propriétés en plus de celles décrites dans la présente demande. En particulier, le polymère cationique selon l'invention peut être un agent d'aide au broyage du clinker ou des matériaux hydrauliques et/ou pouzzolaniques selon l'invention, également appelé agent de mouture.

Superplastifiant

De préférence, le mélange selon l'invention comprend, outre un polymère cationique spécifique, également au moins un superplastifiant.
On entend par le terme « superplastifiant » selon la présente invention une molécule organique couramment utilisée dans le domaine des compositions hydrauliques afin de fluidifier les compositions hydrauliques ou réduire le dosage en eau à consistance égale. Un superplastifiant selon la présente invention peut par exemple être un polymère anionique à structure peigne, tel qu'un polycarboxylate polyoxyde (PCP), un lignosulfonate, un polyoxyalkylène diphosphonate ou leurs mélanges.
On entend par le terme « polycarboxylate polyoxyde » ou « PCP » selon la présente invention un copolymère des acides acryliques ou méthacryliques, et de leurs esters de poly(oxyde d'éthylène) (POE).
De préférence, le superplastifiant selon la présente invention est choisi parmi ceux les plus efficaces pour réduire la viscosité des compositions hydrauliques.
De préférence, le superplastifiant selon la présente invention est choisi parmi ceux les plus efficaces pour réduire la viscosité des compositions hydrauliques.
De préférence, le superplastifiant selon la présente invention a un poids moléculaire inférieur à 200000 g/mol, de préférence inférieur à 100000 g/mol et de préférence inférieur à 80000 g/mol.
Le superplastifiant selon l'invention peut être de structure linéaire, ramifiée ou en peigne.
De préférence, au moins l'un parmi le polymère cationique et le superplastifiant présente une structure en peigne.
Tout particulièrement préféré est un superplastifiant de structure en peigne. Dans ce cas, la chaîne principale est en règle générale hydrocarbonée.
Le superplastifiant selon l'invention peut comprendre notamment des groupes carboxyliques, sulfoniques, saccharidiques ou aminés.
Le superplastifiant selon l'invention peut contenir par ailleurs des groupements pendants non ioniques, en particulier, des groupements polyéther. Les groupements polyéther comprennent généralement des motifs d'éthylèneoxyde ou de propylèneoxyde ou encore une combinaison des deux.
Le superplastifiant selon l'invention peut également contenir par ailleurs des groupements pendants de type di- ou oligo-saccharides (voir par exemple la demande de brevet EP 2072531) ou de type polyamine polyamide (voir par exemple la demande de brevet EP 2065349).
Un grand nombre de superplastifiants tels que décrits sont connus en tant que tels.
Ils peuvent être obtenus directement par copolymérisation, voie décrite dans les brevets EP 0056627, JP 58074552, US 5,393,343.
Ils peuvent également être préparés par modification post-synthétique d'un polymère, comme décrit par exemple dans le brevet US 5,614,017.
Le superplastifiant selon l'invention peut être ajouté à différents moments dans le procédé de fabrication, en même temps ou à part du polymère cationique selon l'invention. Il peut tout d'abord être mélangé au matériau hydraulique et/ou pouzzolanique selon l'invention. Selon une variante, il peut être ajouté au moment de la préparation de la composition hydraulique selon l'invention.

Composition hydraulique

Un autre objet selon l'invention est une composition hydraulique comprenant au moins un mélange selon l'invention et au moins un liant hydraulique. De préférence, ledit liant hydraulique est un ciment Portland.
La composition selon l'invention peut être obtenue par broyage séparé des différents constituants ou par co-broyage des différents constituants.
De préférence, le mélange, le polymère cationique et le superplastifiant de la composition hydraulique selon l'invention présentent les mêmes caractéristiques que celles décrites ci-avant.
De préférence, la composition hydraulique selon l'invention comprend en outre des granulats.
De préférence, la composition hydraulique selon l'invention comprend en outre un accélérateur. Ledit accélérateur peut-être n'importe quel accélérateur connu, avantageusement un sel de calcium.

Traitement

Un autre objet selon l'invention est un procédé de traitement d'un matériau hydraulique et/ou pouzzolanique, comprenant les étapes de :

- préparation d'une composition cationique comprenant de l'eau et au moins un polymère cationique hydrosoluble présentant une densité de charges cationiques supérieure à 0,5 meq/g et une viscosité intrinsèque inférieure à 1 dl/g à titre de matière active ;
- mélange de ladite composition cationique avec ledit au moins un matériau hydraulique et/ou pouzzolanique ;

ledit matériau hydraulique et/ou pouzzolanique n'étant pas un clinker, ni du calcaire, ni du gypse, ni du sulfate de calcium, ni du sulfate de calcium anhydre, ni du sulfate de calcium semihydraté, ni du plâtre, ni de la chaux.
De préférence, le procédé selon l'invention comprend une étape de préparation d'une composition cationique qui comprend en outre au moins un superplastifiant.
De préférence, le procédé selon l'invention comprend une étape supplémentaire d'ajout d'un accélérateur. Ledit accélérateur peut être n'importe quel accélérateur connu, avantageusement un sel de calcium.
De préférence, le matériau hydraulique et/ou pouzzolanique, le polymère cationique hydrosoluble et le superplastifiant du procédé selon l'invention présentent les mêmes caractéristiques que celles décrites ci-avant.
Une composition cationique comprenant les deux polymères ioniques de charge opposée est particulièrement avantageuse. En effet, elle est de manière surprenante stable et ne forme pas de précipité.
Il est supposé que cet effet est lié à l'encombrement stérique du polymère peigne, lequel limite l'accessibilité des charges portées par le polymère et évite ainsi la précipitation des polymères de charge opposée.
Avantageusement, la composition comprend au plus 50% en poids, et en particulier au plus 30% en poids de superplastifiant. Particulièrement préférée est une composition comprenant de 20 à 30% en poids de superplastifiant par rapport au poids total (superplastifiant + polymère cationique).
La composition cationique peut être utilisée selon l'application envisagée, sous forme de solide (granulé, bille, poudre fine) ou liquide. De préférence, elle se présente sous forme de solution aqueuse. Elle peut comprendre, outre la matière active et le ou les solvants, notamment au moins un adjuvant habituel, comme par exemple un agent de mouture, un accélérateur, un agent entraîneur d'air, un agent viscosant, un retardateur, un fluidifiant, un agent anti-retrait ou leurs mélanges.
Le dosage est particulièrement aisé pour des formes liquides. D'autre part, compte tenu du poids moléculaire relativement faible des macromolécules sélectionnées, il est possible d'utiliser des solutions aqueuses à concentrations élevées en polymère sans problème lié à de fortes viscosités. Il est particulièrement intéressant d'utiliser des concentrations en polymère élevées pour réduire les coûts (transport, stockage). La concentration en polymère dans la solution peut varier, mais est généralement comprise entre 20 et 80% en poids.
En variante, il peut être envisagé de préparer un pré-mélange d'une petite quantité dudit matériau hydraulique et/ou pouzzolanique avec le polymère cationique hydrosoluble puis d'ajouter ce pré-mélange à la quantité restante dudit matériau hydraulique et/ou pouzzolanique.
La composition cationique selon l'invention est de préférence sous forme liquide. Elle peut être mélangée, aspergée ou vaporisée sur les matériaux hydrauliques et/ou pouzzolaniques selon l'invention à traiter. De préférence le traitement sera réalisé par simple mélange ou simple mise en contact.
Le traitement du matériau hydraulique et/ou pouzzolanique selon l'invention peut intervenir à différents moments. Tout d'abord, la composition cationique selon l'invention peut être ajoutée avant, pendant et/ou après le broyage desdits matériaux hydrauliques et/ou pouzzolaniques, de préférence après ledit broyage. Selon une variante, la composition cationique selon l'invention peut être mélangée auxdits matériaux hydrauliques et/ou pouzzolaniques par le biais de tout ou partie de l'eau de gâchage, avant le mélange au ciment. Enfin, selon une autre variante, la composition

cationique selon l'invention peut être ajoutée auxdits matériaux hydrauliques et/ou pouzzolaniques avant, pendant et/ou après le co-broyage avec le clinker Portland.

Les matériaux hydrauliques et/ou pouzzolaniques ainsi traités peuvent être utilisés de manière habituelle, notamment pour la préparation de compositions hydrauliques. Ils sont utiles dans la préparation de compositions hydrauliques présentant des propriétés constantes.

La composition cationique décrite est stable dans le temps et résiste à la chaleur et au gel.

Un autre objet selon l'invention est l'utilisation d'un mélange selon l'invention pour la fabrication d'une composition hydraulique.

Un autre objet selon l'invention est l'utilisation d'une composition hydraulique telle que décrite ci-avant pour la fabrication d'un objet durci.

De préférence, le mélange, le ciment, le polymère cationique et le superplastifiant des utilisations selon l'invention présentent les mêmes caractéristiques que celles décrites ci-avant.

Enfin, un autre objet selon l'invention est un objet durci obtenu à partir d'une composition hydraulique telle que décrite ci-avant. De préférence, le mélange, le polymère cationique hydrosoluble et le superplastifiant de l'objet durci selon l'invention présentent les mêmes caractéristiques que celles décrites ci-avant.

Les exemples suivants illustrent l'invention sans en limiter la portée.

**Mesure de l'étalement et suivi de la rhéologie**

L'étalement d'un mortier est mesuré grâce à un mini cône d'Abrams dont le volume est de 800 mL. Les dimensions du cône sont les suivantes :

- diamètre du cercle de la base supérieure : 50 +/- 0,5 mm ;
- diamètre du cercle de la base inférieure : 100 +/- 0,5 mm ;
- hauteur : 150 +/- 0,5 mm.

Le cône est posé sur une plaque de verre séchée et rempli de mortier frais. Il est ensuite arasé. La levée du cône provoque un affaissement de la pâte de mortier sur la plaque de verre. Le diamètre de la galette obtenue est mesuré en millimètres. C'est l'étalement du mortier.

La consistance d'un mortier est considérée comme bonne lorsque la mesure de l'étalement est voisine de 320 mm.

Ces opérations, répétées à plusieurs échéances (5, 15, 30 et 60 minutes), permettent de suivre l'évolution de la rhéologie du mortier pendant 1 heure.

**Mesure des résistances mécaniques**

Une heure après le gâchage de la formulation, on coule trois éprouvettes dans des moules 4 x 4 x 16 cm en acier. Les éprouvettes sont coulées en une seule couche, et choquées 60 fois à la table à chocs. Les moules sont ensuite couverts par une vitre (avec un joint) et placés dans une armoire à 100 % d'hygrométrie. On démoule les éprouvettes à l'échéance 24 heures après le gâchage. L'une des éprouvettes est cassée immédiatement après le démoulage. Les deux autres éprouvettes sont immergées dans des bacs d'eau à 20°C jusqu'à l'échéance de 28 jours après le gâchage et sont ensuite cassées.

**EXEMPLES**

Polymère cationique

Les polymères cationiques sont caractérisés au moyen de leur cationicité et poids moléculaire.

1) Mesure de la cationicité

La cationicité ou densité de charges cationiques (en meq/g) représente la quantité de charges (en mmol) portée par 1 g de polymère. Cette propriété est mesurée par titration colloïdale par un polymère anionique en présence d'un indicateur coloré sensible à l'ionicité du polymère en excès.

Dans les exemples ci-après, la cationicité a été déterminée de la manière suivante. Dans un récipient adapté, on introduit 60 ml d'une solution tampon de phosphate de sodium à 0,001 M - pH 6 et 1 ml de solution de bleu d'o-toluidine à 4,1 x $10^{-4}$ M puis 0,5 ml de solution de polymère cationique à doser.

Cette solution est titrée avec une solution de polyvinylsulfate de potassium jusqu'à virage de l'indicateur.

On obtient la cationicité par la relation suivante :

$$\text{Cationicité (meq/g)} = (V_{epvsk} * N_{pvsk}) / (V_{pc} * C_{pc})$$

Dans laquelle :

$V_{pc}$ est le volume de solution du polymère cationique ;
$C_{pc}$ est la concentration de polymère cationique en solution ;
$V_{epvsk}$ est le volume de solution de polyvinylesulfate de potassium ; et
$N_{pvsk}$ est la normalité de la solution de polyvinylesulfate de potassium.

2) Mesure de la viscosité intrinsèque

Les mesures de viscosité intrinsèque des polymères cationiques sont réalisées dans une solution NaCl 3 M, avec un viscosimètre capillaire de type Ubbelhode, à 25°C.

On mesure le temps d'écoulement dans le tube capillaire entre 2 repères pour le solvant et des solutions du polymère à différentes concentrations. On calcule la viscosité réduite en divisant la viscosité spécifique par la concentration de la solution de polymère. La viscosité spécifique est obtenue pour chaque concentration, en divisant la différence entre les temps d'écoulement de la solution de polymère et du solvant, par le temps d'écoulement du solvant. En traçant la droite de la viscosité réduite en fonction de la concentration de la solution de polymère, on obtient une droite. L'intersection avec l'ordonnée de cette droite correspond à la viscosité intrinsèque pour une concentration égale à zéro.

Cette valeur est corrélée au poids moléculaire moyen d'un polymère.

Formules mortiers

Tableau 1

| | Masse | |
|---|---|---|
| Ciment | 595 - X | g |
| Matériau hydraulique et/ou pouzzolanique selon l'invention | X | g |
| Eau de pré-mouillage | 114 | g |
| Eau de gâchage | 263 | g |
| Sable normalisé | 1350 | g |
| Sable PE2LS | 330 | g |
| Adjuvant | Y | g |

Le ciment est un ciment de type CEM I 52.5N CE CP2 NF (provenance Le Havre - usine Lafarge).

Le sable normalisé est un sable siliceux conforme à la norme EN 196.1 (fournisseur : Société Nouvelle du Littoral).

Le sable PE2LS est un sable siliceux de diamètre inférieur ou égal à 0,315 mm (Fournisseur : Fulchiron).

L'adjuvant est le Glénium 27 (extrait sec : 20,3 % en masse ; Fournisseur : BASF).

Le polymère cationique utilisé pour tous les exemples qui vont suivre est une polyamine épichlorhydrine - diméthylamine, ayant une cationicité de 7,3 meq/g et une viscosité intrinsèque de 0,04 dl/g (FL2250 ; extrait sec : 55 % en masse ; Fournisseur : SNF).

Le traitement des matériaux hydrauliques et/ou pouzzolaniques selon l'invention par la composition cationique est réalisé par mélange de la solution cationique avec lesdits matériaux hydrauliques et/ou pouzzolaniques. Après mélange, la solution cationique et les matériaux hydrauliques et/ou pouzzolaniques sont agités énergiquement pendant 20 à 30 secondes, puis laissés au repos pendant 4 minutes, et enfin utilisés dans le mortier.

Le dosage en polymère cationique est exprimé en ppm (ou mg/kg) de polymère sec par kilogramme de matériau hydraulique et/ou pouzzolanique selon l'invention.

Protocole de préparation du mortier :

Dans le bol d'un malaxeur Perrier, on introduit le sable, puis l'eau de pré-mouillage en agitant à faible vitesse (140 tr/min). On laisse reposer pendant 4 minutes avant d'introduire les liants (ciment, matériaux hydrauliques et/ou pouzzolaniques tels que définis selon la présente invention). On malaxe à nouveau pendant 1 minute à petite vitesse puis on ajoute en 30 secondes à petite vitesse l'eau de gâchage additionnée de l'adjuvant. Enfin, on malaxe encore 2 minutes à 280 tr/min.

Dans les tableaux 2 et 3 ci-après, les notations (1) et (2) ont le sens suivant :

- (1) correspond au taux de substitution du ciment par le matériau hydraulique et/ou pouzzolanique selon l'invention (pouzzolane ou argile calcinée) ;
- (2) Liant = ciment + matériau hydraulique et/ou pouzzolanique selon l'invention (pouzzolane ou argile calcinée).

Exemples avec une pouzzolane naturelle : Pouzzolane de Milos - Grèce

Tableau 2

| | Pouzzolane | Taux de substitution (1) | Dosage Traitement Pouzzolane | Dosage adjuvant | E/Liant | Etalement 5 minutes | Résistance compression 1j | Résistance compression 28j |
|---|---|---|---|---|---|---|---|---|
| | | % | ppm sec / pouzzolane | % sec/liant (2) | | mm | MPA | MPA |
| 1 | Pouzzolane - Grèce | 0 | - | 0.1 | 0.63 | 340 | 18.1 | 41.6 |
| 2 | Pouzzolane - Grèce | 30 | - | 0.1 | 0.63 | 200 | 9.3 | 27.9 |
| 3 | Pouzzolane - Grèce | 30 | - | 0.1 | 0.89 | 320 | 4.0 | 16.0 |
| 4 | Pouzzolane - Grèce | 30 | - | 0.3 | 0.63 | 360 | 9.4 | 29.8 |
| 5 | Pouzzolane - Grèce | 30 | 3000 | 0.1 | 0.79 | 335 | 5.6 | 19.1 |
| 6 | Pouzzolane - Grèce | 30 | 3000 | 0.2 | 0.63 | 335 | 9.8 | 30.1 |
| 7 | Pouzzolane - Grèce | 30 | 3000 | 0.3 | 0.53 | 320 | 11.2 | 32.8 |

Exemples avec une argile calcinée (provenance France - société Malet)

Tableau 3

| | Argile | Taux de substitution (1) | Dosage Traitement argile | Dosage adjuvant | E/Liant | Etalement 5 minutes | Résistance compression 1j | Résistance compression 28j |
|---|---|---|---|---|---|---|---|---|
| | | % | ppm sec / argile | % sec/ liant (2) | | mm | MPA | MPA |
| 8 | Argile calcinée | 0 | - | 0.1 | 0.63 | 340 | 18.1 | 42.6 |
| 9 | Argile calcinée | 30 | - | 0.1 | 0.63 | 155 | 6.9 | |
| 10 | Argile calcinée | 30 | - | 0.1 | 0.87 | 345 | 3.2 | 24.1 |
| 11 | Argile calcinée | 30 | - | 0.4 | 0.63 | 350 | 6.4 | 37.4 |
| 12 | Argile calcinée | 30 | 2000 | 0.1 | 0.75 | 330 | 4.7 | 32.7 |
| 13 | Argile calcinée | 30 | 2000 | 0.3 | 0.63 | 335 | 7.3 | 37.1 |

D'après les tableaux 2 et 3 ci-avant, on constate que les compositions hydrauliques selon l'invention permettent de diminuer la quantité d'adjuvant utilisée pour obtenir une composition hydraulique ayant les mêmes performances (rhéologie et résistances mécaniques). En effet, si l'on compare les exemples 4 et 6, le dosage en adjuvant est de 0.2 % pour la composition selon l'invention (exemple 6), alors qu'il est de 0.3 % pour la composition sans traitement, pour une rhéologie équivalente (étalement à 5 minutes respectivement à 330 mm pour l'exemple 4 et 335 mm pour l'exemple 6).

D'autre part, les compositions hydrauliques selon l'invention permettent d'obtenir de meilleures résistances pour une même quantité d'adjuvant. En effet, si l'on compare les exemples 4 et 7, le dosage en adjuvant est de 0.3 % dans les deux cas, mais le rapport E/Liant est de 0.63 pour l'exemple 4, alors qu'il est de 0.53 pour la composition hydraulique selon l'invention (exemple 7), et les résistances à 1 jour sont respectivement de 9.4 MPa pour l'exemple 4 et de 11.2 MPa pour l'exemple 7.

Le tableau 2, comme du reste le tableau 3, illustre le fait que la substitution d'une partie du ciment par un matériau hydraulique et/ou pouzzolanique, ledit matériau n'étant pas un clinker, ni du calcaire, ni du gypse, ni du sulfate de calcium, ni du sulfate de calcium anhydre, ni du sulfate de calcium semihydraté, ni du plâtre, ni de la chaux, entraîne généralement une dégradation de la rhéologie mais aussi des performances mécaniques (passage de la ligne 1 à la ligne 2).

La perte en terme de rhéologie est traditionnellement récupérée via un ajout d'eau (passage de la ligne 2 à la ligne 3) ce qui se traduit par une forte baisse des performances mécaniques. Il est également possible de récupérer la rhéologie de référence par l'introduction d'un adjuvant (passage de la ligne 2 à la ligne 4) mais la quantité d'adjuvant est importante et impacte de façon notable le coût global de la formule. Le non ajout d'eau par rapport au cas de la ligne 3 permet alors d'obtenir les performances mécaniques mentionnées à la ligne 2.

Les lignes 5, 6 et 7 illustrent l'intérêt de l'invention puisqu'elle permet, à rhéologie constante, soit de diminuer l'ajout d'eau (passage de la ligne 3 à la ligne 5) et donc d'obtenir des résistances supérieures, soit de diminuer de 30 % la quantité d'adjuvant (passage de la ligne 4 à la ligne 6) ou soit de diminuer la quantité d'eau sans diminution de l'adjuvant (passage de la ligne 4 à la ligne 7) ce qui permet d'obtenir des résistances supérieures au cas sans traitement (ligne 2), permettant ainsi d'obtenir un liant présentant une rhéologie compatible avec les attentes des utilisateurs.

Exemples avec une cendre volante

La cendre volante utilisée pour le présent exemple est la cendre volante Rosa (Fournisseur : ScotAsh) dont la composition chimique et la surface spécifiques sont données dans le tableau 4 suivant. Cette cendre volante a une perte au feu de 12,1 % en masse, mesurée selon la norme EN 196-2.

La cendre volante testée ne comprend pas d'argile en tant que telle, mais peut éventuellement comprendre une forme particulière d'argile calcinée (la mullite).

Tableau 4 (pourcentages massiques ou ppm)

| **$SiO_2$** | **$Al_2O_3$** | **$Fe_2O_3$** | **CaO** | **MgO** | **$K_2O$** | **$Na_2O$** | **$SO_3$** | **$TiO_2$** | **$Mn_2O_3$** |
|---|---|---|---|---|---|---|---|---|---|
| 41,16% | 25,39% | 3,46% | 10,46% | 2,07% | 0,74% | 0,26% | 0,63% | 1,21% | 0,06% |
| **$P_2O_5$** | **$Cr_2O_3$** | **$ZrO_2$** | **SrO** | **ZnO** | **$As_2O_3$** | **BaO** | **CuO** | **NiO** | **PbO** |
| 1,11% | 0,02% | 0,04% | 0,24% | 0% | 32ppm | 2216ppm | 181 ppm | 132ppm | 42ppm |
| **$V_2O_5$** | **CaOl** | **$K_2O$sol** | **$Na_2O$sol** | **Densité** | **Surface spécifique Blaine** | | | | |
| 373ppm | 0,7% | <0,05% | <0,05% | 2,29 | 3510 $cm^2/g$ | | | | |

Pour cet exemple, le taux de substitution du ciment est de 25 % en volume, ce qui correspond à X = 109,2 g de cendres volantes (voir tableau 1).

En ce qui concerne l'adjuvant, Y = 2,35 g, ce qui correspond à environ 800 ppm d'adjuvant en masse par rapport au ciment.

La quantité de polymère cationique est de 1,08 g (ce qui correspond à 1000 ppm en masse par rapport au ciment) et de 2,16 g (ce qui correspond à 2000 ppm en masse par rapport au ciment).

Le tableau 5 ci-dessous répertorie les résultats obtenus avec la cendre volante décrite ci-avant.

Tableau 5

| Liant | Etalement (mm) | | | |
|---|---|---|---|---|
| | 5 min | 15 min | 30 min | 60 min |
| 100 % ciment - sans traitement | 330 | 325 | 300 | 280 |
| 100 % ciment traité avec 1,08 g de polymère cationique | 360 | 355 | 345 | 330 |
| 100 % ciment traité avec 2,16 g de polymère cationique | 360 | 350 | 340 | 325 |
| 75 % ciment - 25 % cendres volantes sans traitement | 295 | 260 | 215 | 175 |
| 75 % ciment - 25 % cendres volantes, traités avec 1,08 g de polymère cationique | 315 | 295 | 260 | 210 |
| 75 % ciment - 25 % cendres volantes, traités avec 2,16 g de polymère cationique | 335 | 320 | 295 | 260 |
| 75 % ciment - 25 % cendres volantes, traités avec 3,24 g de polymère cationique | 360 | 330 | 320 | 275 |
| 75 % ciment - 25 % cendres volantes, traités avec 4,32 g de polymère cationique | 355 | 330 | 315 | 265 |

D'après le tableau 5 ci-avant, on constate que la substitution d'une partie du ciment par des cendres volantes entraîne une diminution de l'étalement, qui passe par exemple de 330 mm à 5 minutes, pour une formulation avec 100 % de ciment sans traitement, à 295 mm à 5 minutes, pour une formulation avec 25 % de cendres volantes sans traitement.

Le traitement avec le polymère cationique selon l'invention entraine une augmentation de l'étalement, qui passe par exemple de 295 mm à 5 minutes, pour la formulation avec 75 % de ciment et 25 % de cendres volantes sans traitement, à 315 mm à 5 minutes, pour une formulation avec 75 % de ciment et 25 % de cendres volantes traités avec 1,08 g de polymère cationique.

D'autre part, contrairement à la formulation avec 100% de ciment traité, dont l'étalement à 5 minutes est de 360 mm quelle que soit la quantité de polymère cationique utilisée, l'effet du polymère cationique selon l'invention pour les formulations avec 75 % de ciment et 25 % de cendres volantes dépend de la quantité de polymère cationique utilisée pour le traitement. En effet, l'étalement à 5 minutes pour la formulation avec 75 % de ciment et 25 % de cendres volantes est de 315 mm à 5 minutes avec 1,08 g de polymère cationique et de 335 mm avec 2,16 g de polymère cationique. Pour les formulations comprenant des cendres volantes, on constate un plafonnement pour le même étalement (355-360 mm à 5 minutes) mais pour un dosage en polymère cationique selon l'invention plus élevé (à partir de 3,24 g de polymère cationique).

En outre, la cendre volante testée n'ayant pas d'argile, l'effet observé du polymère cationique selon l'invention n'est pas un effet d'inertage des argiles, mais bien un effet supplémentaire sur la cendre volante elle-même ou sur d'autres impuretés qu'elle peut comprendre.

Enfin, il est à noter que l'étalement de la formulation avec 25 % de cendres volantes traitées avec 2,16 g de polymère cationique se rapproche de l'étalement de la formulation avec 100 % de ciment non traité.

Exemple avec de la fumée de silice

La fumée de silice utilisée pour cet exemple est commercialisée par la Société Européenne des Produits Réfractaires sous le nom MST.

La formule de mortier testée est celle décrite dans le tableau 1 ci-avant, dans laquelle le ciment, les sables, l'adjuvant et le polymère cationique sont les mêmes que ceux décrits.

Le protocole de traitement par le polymère cationique selon l'invention et le protocole de préparation du mortier test sont les mêmes que ceux décrits précédemment.

Le tableau 6 ci-après rassemble les résultats obtenus en substituant 10 % en masse de ciment par la fumée de silice décrite ci-dessus.

Tableau 6

| Liant | Eau | Adjuvant | Etalement (mm) | | | |
|---|---|---|---|---|---|---|
| | masse d'eau / masse de liant | % sec masse d'adjuvant / masse de liant | 5 min | 15 min | 30 min | 60 min |
| 100 % ciment sans traitement | 0,633 | 0,06 | 315 | 275 | 235 | 200 |

(suite)

| Liant | Eau | Adjuvant | Etalement (mm) | | | |
|---|---|---|---|---|---|---|
| | masse d'eau / masse de liant | % sec masse d'adjuvant / masse de liant | 5 min | 15 min | 30 min | 60 min |
| 90 % ciment 10 % fumées de silice sans traitement | 0,633 | 0,06 | 280 | 270 | 265 | 235 |
| 90 % ciment 10 % fumées de silice, traités avec 875 ppm de polymère cationique | 0,633 | 0,06 | 295 | 285 | 280 | 265 |

D'après le tableau 6 ci-dessus, quand on substitue une partie du ciment par de la fumée de silice, l'étalement du mortier à 5 minutes diminue et passe de 315 mm à 280 mm.

Quand le liant comprenant du ciment et de la fumée de silice est traité avec le polymère cationique selon l'invention, l'étalement du mortier augmente à toutes les échéances. Par exemple, l'étalement du mortier à 15 minutes passe de 270 mm à 285 mm grâce au traitement avec le polymère cationique selon l'invention. De même, l'étalement du mortier à 60 minutes passe de 235 mm à 265 mm.

**Revendications**

**1.** Mélange comprenant au moins un matériau pouzzolanique et au moins un polymère cationique hydrosoluble, ledit polymère cationique présentant une densité de charges cationiques supérieure à 0,5 meq/g et une viscosité intrinsèque inférieure à 1 dl/g, et la chaux en tant que telle ne faisant pas partie des matériaux pouzzolaniques.

**2.** Mélange selon la revendication 1, **caractérisé en ce qu'**il comprend en outre au moins un superplastifiant.

**3.** Mélange selon la revendication 1 ou 2, **caractérisé en ce qu'**il comprend en outre un accélérateur.

**4.** Mélange selon l'une quelconque des revendications 1 à 3, **caractérisé en ce que** le matériau pouzzolanique est choisi parmi les pouzzolanes naturelles, les pouzzolanes calcinées, les argiles calcinées, les cendres volantes, les schistes calcinés, les laitiers, les fumées de silice ou leurs mélanges.

**5.** Mélange selon la revendication 4, **caractérisé en ce que** les pouzzolanes sont choisies parmi les ponces, les tuff, les scories ou leurs mélanges.

**6.** Mélange selon la revendication 4, **caractérisé en ce que** les argiles calcinées sont choisies parmi la kaolinite, les smectites, l'illite, la muscovite, les chlorites, activées thermiquement, ou leurs mélanges.

**7.** Composition hydraulique comprenant au moins un mélange selon l'une des revendications 1 à 6 et au moins un liant hydraulique.

**8.** Composition hydraulique selon la revendication 7, **caractérisée en ce que** ledit liant hydraulique est un ciment Portland.

**9.** Composition hydraulique selon la revendication 7 ou 8, **caractérisée en ce qu'**elle comprend en outre des granulats.

**10.** Composition hydraulique selon l'une quelconque des revendications 7 à 9 **caractérisée en ce qu'**elle comprend en outre un accélérateur.

**11.** Procédé de traitement d'un matériau pouzzolanique, comprenant les étapes de :

- préparation d'une composition cationique comprenant de l'eau et au moins un polymère cationique hydrosoluble présentant une densité de charges cationiques supérieure à 0,5 meq/g et une viscosité intrinsèque inférieure à 1 dl/g à titre de matière active ;

- mélange de ladite composition cationique avec ledit au moins un matériau pouzzolanique ;

la chaux en tant que telle ne faisant pas partie des matériaux pouzzolaniques.

**12.** Procédé selon la revendication 11, **caractérisée en ce que** ladite composition cationique comprend en outre au moins un superplastifiant.

**13.** Utilisation d'un mélange selon l'une des revendications 1 à 6 pour la fabrication d'une composition hydraulique.

**14.** Utilisation d'une composition hydraulique selon l'une quelconque des revendications 7 à 10 pour la fabrication d'un objet durci.

**15.** Objet durci obtenu à partir d'une composition hydraulique selon l'une quelconque des revendications 7 à 10.

**Patentansprüche**

**1.** Mischung, die mindestens ein puzzolanisches Material und mindestens ein wasserlösliches kationisches Polymer umfasst, wobei das kationische Polymer eine Dichte von kationischen Ladungen von mehr als 0,5 meq/g und eine Grenzviskosität von weniger als 1 dl/g hat, und Kalziumoxid wird per se nicht als ein puzzolanisches Material angesehen.

**2.** Mischung nach Anspruch 1, **dadurch gekennzeichnet, dass** sie ferner mindestens einen Superplastifierungsmittel umfasst.

**3.** Mischung nach Anspruch 1 oder 2, **dadurch gekennzeichnet, dass** sie ferner einen Beschleuniger umfasst.

**4.** Mischung nach einem der Ansprüche 1 bis 3, **dadurch gekennzeichnet, dass** das puzzolanische Material unter natürlichen Puzzolanen, kalzinierten Puzzolanen, kalzinierten Tonen, Flugasche, kalziniertem Schiefern, Schlacken, Kieselsäuredunst oder Mischungen derselben ausgewählt wird.

**5.** Mischung nach Anspruch 4, **dadurch gekennzeichnet, dass** Puzzolane aus Bimsstein, Tuff, Schlacke oder Mischungen derselben ausgewählt wird.

**6.** Mischung nach Anspruch 4, **dadurch gekennzeichnet, dass** die kalzinierten Tone aus thermisch aktiviertem Kaolinit, Smektiten, Illit, Muskovit, Chloriten oder Mischungen derselben ausgewählt wird.

**7.** Hydraulische Zusammensetzung, die mindestens eine Mischung nach einem der Ansprüche 1 bis 6 und mindestens ein hydraulisches Bindemittel umfasst.

**8.** Hydraulische Zusammensetzung nach Anspruch 7, **dadurch gekennzeichnet, dass** das hydraulische Bindemittel ein Portland-Zement ist.

**9.** Hydraulische Zusammensetzung nach Anspruch 7 oder 8, **dadurch gekennzeichnet, dass** sie ferner Zuschlagstoffe umfasst.

**10.** Hydraulische Zusammensetzung nach einem der Ansprüche 7 bis 9, **dadurch gekennzeichnet, dass** sie ferner einen Beschleuniger umfasst.

**11.** Prozess für die Behandlung eines puzzolanischen Materials, das die folgenden Schritte umfasst:

- Herstellung einer kationischen Zusammensetzung, die Wasser und mindestens ein wasserlösliches kationisches Polymer umfasst, das eine Dichte von kationischen Ladungen von mehr als 0,5 meq/g und eine Grenzviskosität von weniger als 1 dl/g durch Aktivsubstanz hat;
- Mischen der kationischen Zusammensetzung mit dem mindestens einen puzzolanischen Material;

Kalziumoxid wird per se nicht als puzzolanisches Material angesehen.

**12.** Prozess nach Anspruch 11, **dadurch gekennzeichnet, dass** die kationische Zusammensetzung ferner mindestens einen Superplastifierungsmittel umfasst.

**13.** Verwendung einer Mischung nach einem der Ansprüche 1 bis 6 für die Herstellung einer hydraulischen Zusammensetzung.

**14.** Verwendung einer hydraulischen Zusammensetzung nach einem der Ansprüche 7 bis 10 für die Herstellung eines gehärteten Objektes.

**15.** Gehärtetes Objekt, das aus einer hydraulischen Zusammensetzung nach einem der Ansprüche 7 bis 10 erhalten wird.

## Claims

**1.** A mix comprising at least one pozzolanic material and at least one water-soluble cationic polymer, said cationic polymer having a density of cationic charges greater than 0.5 meq/g and an intrinsic viscosity less than 1 dl/g, and lime per se is not considered to be a pozzolanic material.

**2.** The mix according to claim 1, **characterised in that** it further comprises at least one superplasticizer.

**3.** The mix according to claim 1 or claim 2, **characterised in that** it further comprises an accelerator.

**4.** The mix according to any one of claims 1 to 3, **characterised in that** the pozzolanic material is selected from natural pozzolans, calcined pozzolans, calcined clays, fly ash, calcined shale, slags, silica fume or mixtures thereof.

**5.** The mix according to claim 4, **characterised in that** the pozzolans are selected from pumice, tuff, scoria or mixtures thereof.

**6.** The mix according to claim 4, **characterised in that** the calcined clays are selected from thermally activated kaolinite, smectites, illite, muscovite, chlorites, or mixtures thereof.

**7.** A hydraulic composition comprising at least one mix according to any one of claims 1 to 6 and at least one hydraulic binder.

**8.** The hydraulic composition according to claim 7, **characterised in that** said hydraulic binder is a Portland cement.

**9.** The hydraulic composition according to claim 7 or 8, **characterised in that** it further comprises aggregates.

**10.** The hydraulic composition according to any one of claims 7 to 9 **characterised in that** it further comprises an accelerator.

**11.** A process for the treatment of a pozzolanic material comprising the steps of:

- preparation of a cationic composition comprising water and at least one water-soluble cationic polymer having a density of cationic charges greater than 0.5 meq/g and an intrinsic viscosity less than 1 dl/g by way of active matter;
- mixing said cationic composition with said at least one pozzolanic material;

lime per se is not considered to be a pozzolanic material.

**12.** The process according to claim 11, **characterised in that** said cationic composition further comprises at least one superplasticizer.

**13.** The use of a mix according to one of claims 1 to 6 for the production of a hydraulic composition.

**14.** The use of a hydraulic composition according to any one of claims 7 to 10 for the production of a hardened object.

**15.** A hardened object obtained from a hydraulic composition according to any one of claims 7 to 10.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2897057
- WO 2006032786 A
- WO 9851640 A
- JP H09020536 B
- US 5292441 A
- US 3738945 A
- US 3725312 A
- FR 1042084
- EP 2072531 A
- EP 2065349 A
- EP 0056627 A
- JP 58074552 B
- US 5393343 A
- US 5614017 A